# EUROPÄISCHE PATENTSCHRIFT

(11) **EP 1 073 206 B1**
(45) Veröffentlichungstag und Bekanntmachung des Hinweises auf die Patenterteilung: **25.02.2009**
(21) Anmeldenummer: 00115447.5
(22) Anmeldetag: 18.07.2000
(51) Int. Cl.: H04B 1/38, H04M 1/60

(54) **Adapterkarte, Kommunikationsvorrichtung, Audioanlage und Sprechfunkgerät**
Adaptor, communications device, audio system and telephone
Adaptateur, dispositif de communication, système audio et télephone

(30) Priorität: 24.07.1999 DE 19934863
(43) Veröffentlichungstag der Anmeldung: 31.01.2001
(73) Patentinhaber: ROBERT BOSCH GMBH, 70442 Stuttgart (DE)
(72) Erfinder: Duckeck, Ralf, 31137 Hildesheim (DE); Rychlak, Stefan, 31241 Ilsede (DE)

(56) Entgegenhaltungen:
- EP-A- 0 670 638
- EP-A- 0 821 502
- EP-A- 0 840 465
- WO-A-96/23381
- WO-A-98/06210
- WO-A-98/57824
- WO-A-99/59360
- DE-A- 19 652 259
- DE-A- 19 734 988
- US-A- 5 608 606

## Beschreibung

### Stand der Technik

Die Erfindung geht von einer Adapterkarte mit Kontaktierungsmitteln zum Auslesen und/oder Einspeisen von Signalen auf die Adapterkarte mittels eines dazu vorgesehenen Adapterkartenlesers, weiter einer Kommunikationsvorrichtung mit einer eine Wiedergabeeinrichtung umfassenden Audioanlage und mit einem zur Wiedergabe empfangener Signale mit der Audioanlage verbindbaren Sprechfunkgerät, des weiteren einer Audioanlage mit mindestens einer Wiedergabevorrichtung zur Wiedergabe akustischer Signale und mit einem Chipkartenleser zum Auslesen und/oder Einspeisen von Signalen aus/auf eine/r eingelegte/n Chipkarte, sowie einem Sprechfunkgerät nach der Gattung der unabhängigen Patentansprüche aus.

Aus dem Prospekt "Programm '97 Sound und Fahrvergnügen pur. Mobile Kommunikation von Blaupunkt" der Firma Blaupunkt Werke GmbH, Hildesheim ist eine Kommunikationsvorrichtung mit einer Audioanlage, nämlich einem Autoradio, und einem Sprechfunkgerät, nämlich einem in das Autoradiogehäuse integrierten Mobilfunktelefon" in Form des Geräts Typ "Amsterdam TCM 127" bekannt. Bei dem genannten Gerät werden mittels des Mobilfunktelefonmoduls empfangene Sprechfunksignale über an das Gerät angeschlossene Lautsprecher, die auch der Wiedergabe von beispielsweise mittels des Rundfunkempfängers empfangener Rundfunkprogramme dienen, wiedergegeben. Darüber hinaus dient ein an das Gerät angeschlossenes Mikrofon zur Aufnahme von Sprachsignalen im Rahmen eines Telefonats.

Aus dem gleichen Prospekt sind Audioanlagen, beispielsweise das Autoradiogerät Typ "Bremen RCM 127" bekannt, an die ein separates Sprechfunkgerät in Form eines Mobilfunktelefons derart anschließbar ist, daß mittels des Mobilfunktelefons empfangene Sprechfunksignale über die Lautsprecher des Autoradios wiedergebbar sind.

Sowohl das erstgenannte Gerät Typ "Amsterdam TCM 127", wie auch das zweitgenannte Gerät Typ "Bremen RCM 127" weisen einen Chipkartenleser zur Auswertung von auf einer eingelegten Chipkarte gespeicherten Informationen auf. Im ersten Fall handelt es sich bei der einzulegenden Chipkarte um eine an sich bekannte SIM-Karte, die einem Mobilfunknetzbetreiber eine Identifizierung des Mobilfunkteilnehmers ermöglicht. Im zweiten Fall handelt es sich bei der Chipkarte um eine sogenannte "Key-Card", auf der ein einem bestimmten Gerät zugeordneter Code zum Zwecke des Diebstahlschutzes gespeichert ist.

US-A-5 608 606 offenbart eine Adapterkarte mit Kontaktierungsmittel 1 zum Auslesen und/oder Einspeisen von Signalen auf die Adapterkarte mittels eines dazu vorgesehen Adapterkartenlesers und Verbindungsmittel zur Herstellen einer Kommunikationsverbindung und zum Austausch von Signalen mit einem Sprechfunkgerät.

In der WO-A-99 59 360 ist eine Adapterkarte mit Kontaktierungsmitteln zum Auslesen und/oder Einspeisen von Signalen auf die Adapterkarte mittels eines dazu vorgesehenen Adapterkartenlesers und mit Verbindungsmitteln zur Herstellung einer Kommunikationsverbindung und zum Austausch von Signalen mit einem Sprechfunkgerät beschrieben.

Die EP-A-0 670 638 offenbart eine Audioanlage mit mindestens einer Wiedergabeeinheit zur Wiedergabe akustischer Signale, einem Chipkartenleser zum Auslesen und/oder Einspeisen von Signalen aus/auf eine/r eingelegte/n Chipkarte und mit Weiterleitungsmitteln zur Weiterleitung von aus einer eingelegten Adapterkarte ausgelesenen akustischen Signalen an die Wiedergabevorrichtung.

Die DE-A-196 52 259 offenbart eine Audioanlage mit Mitteln zum Speichern und Wiedergeben von Nachrichten auf einer Chipkarte.

Die EP-A-0 840 465 offenbart ein Sprechfunkgerät mit einer Sendeeinrichtung zur Übertragung eines aus einem empfangenen Sprechfunksignal abgeleiteten Signals an eine externe Wiedergabevorrichtung für akustische Signale.

Die WO-A-98 06210 offenbart ein Mobiltelefon, das Nachrichten über ein Autoradio wiedergibt.

Die EP-A-0 829 502 offenbart ein Mobiltelefon mit einer Infrarot-Schnittstelle zur Audioübertragung.

Die WO-A-98 57824 offenbart eine Infrarot-Schnittstelle zwischen einem Mobiltelefon und einem Autoradio.

Die WO-A-96 23381 offenbart eine optische Schnittstelle zwischen einem Mobiltelefon und einer externen Wiedergabevorrichtung.

### Vorteile der Erfindung

Die erfindungsgemäße Kommunikationsvorrichtung mit den Merkmalen des unabhängigen Patentanspruchs hat den Vorteil, dass ein separates Sprechfunkgerät, beispielsweise ein GSM-Mobilfunktelefon, auf einfache Weise an eine bestehende Audioanlage anschließbar ist, so daß die Lautsprecher der Audioanlage zur Wiedergabe von empfangenen Sprechfunksignalen mit verwendet werden können.

Auf diese Weise ist mit geringem Aufwand, insbesondere ohne Verkabelungsaufwand, eine Freisprecheinrichtung, insbesondere für ein in einem Kraftfahrzeug betriebenes Mobilfunktelefon, realisierbar, die es dem Fahrer ermöglicht, auch während eines Telefonats beide Hände am Lenkrad zu behalten. Die Erfindung trägt somit zur Verkehrssicherheit bei.

Weiterhin sind auch bereits vorhandene Audioanlagen oder Autoradiogeräte einfach nachrüstbar. Dies ist dann der Fall, wenn, wie beispielsweise von Autoradios der Firma Blaupunkt Werke GmbH bekannt, die Audioanlage ohnehin über einen Chipkartenleser verfügt. Bei solchen Geräten ist lediglich, wenn nicht schon herstellerseitig vorgesehen, eine vergleichsweise geringfügige Anpassung der Betriebsprogramme nötig, Hardwareänderungen sind hingegen nicht erforderlich.

Darüber hinaus kann die Adapterkarte bei den genannten Blaupunktgeräten auch weiterhin zusätzlich ihre angestammte Diebstahlschutz-Funktion übernehmen, bei der ein durch das zu betreibende Autoradio ein auf der Karte gespeicherter Code eingelesen und überprüft wird.

Weiterhin muß das Mobilfunktelefon nicht, wie im Falle des Geräts Typ "Amsterdam TCM 127", fest in die Audioanlage integriert sein, sondern kann durch den Nutzer, beispielsweise bei Verlassen des Fahrzeugs, in das die Audioanlage eingebaut ist, mitgeführt und als separates Mobilfunktelefon genutzt werden.

Da das in ein Mobilfunktelefon eingebaute Mikrofon üblicherweise auch Sprachsignale aus einer für Telefonmikrofone unüblichen Distanz im Bereich von einem Meter mit ausreichender Qualität aufnehmen kann, ist mit dem Erfindungsgegenstand auf besonders einfache Weise, insbesondere auch ohne Ausbau der bestehenden Audioanlage, ohne aufwendige Verkabelungsmaßnahmen, sowie ohne zusätzliche aufwendige und teuere Hardware, eine Freisprecheinrichtung für ein Sprechfunkgerät, insbesondere ein in einem Kraftfahrzeug zu betreibendes Mobilfunktelefon, realisierbar.

Von besonderem Vorteil ist es dabei, wenn sowohl die Adapterkarte, als auch ein Sprechfunkgerät über eine drahtlose, beispielsweise eine besonders einfach realisierbare elektrooptische, Schnittstelle zum Austausch der Sprechfunksignale verfügen, da dann zur Herstellung einer Verbindung zwischen Sprechfunkgerät und Audioanlage keinerlei Verdrahtungsaufwand anfällt.

Zur Erhöhung der Signalqulität der aufgenommenen Sprachsignale ist es von Vorteil, ein zusätzliches, mit der Audioanlage verbundenes Mikrofon vorzusehen, das auf die Aufnahme von Sprachsignalen aus einer üblichen Distanz zwischen Nutzer und Mikrofon ausgelegt ist.

Ist ein Mikrofon, beispielsweise zur Bestimmung eines Geräuschpegels in der Fahrgastzelle eines Kraftfahrzeugs zwecks geräuschabhängiger Lautstärkesteuerung oder zur Sprachbedienung der Audioanalge ohnehin vorhanden, kann dieses zur Aufnahme von Sprachsignalen für einen Sprechfunk vorteilhaft als Teil der Freisprecheinrichtung mit verwendet werden.

### Zeichnungen

Ausführungsbeispiele der Erfindung sind in den Zeichnungen dargestellt und werden nachfolgend näher erläutert.

Es zeigen
Figur 1 ein Blockschaltbild des erfindungswesentlichen Teils einer Audioanlage
Figur 2 ein erfindungsgemäßes Sprechfunkgerät in Form eines Mobilfunktelefongeräts, und
Figur 3 eine erfindungsgemäße Adapterkarte.

### Beschreibung der Ausführungsbeispiele

Die erfindungsgemäße Audioanlage wird nachfolgend ohne Beschränkung der Allgemeinheit am Beispiel eines in ein Kraftfahrzeug eingebauten und in diesem betriebenen Autoradios beschrieben.

Die erfindungsgemäße Audioanlage 10 umfaßt eine zentrale Gerätesteuerung 20 zur Steuerung der geräteinternen Abläufe und zur Steuerung der Komponenten des Geräts. Die Steuerung umfaßt dazu in an sich bekannter Weise einen Speicher, in dem ein Betriebsprogramm abgelegt ist, sowie einen Prozessor zur Abarbeitung des Betriebsprogramms.

An die Steuerung 20 des Autoradios ist beim in der Figur dargestellten Ausführungsbeispiel ein Rundfunkempfänger 30 angeschlossen, der Audiosignale eines empfangenen Rundfunkprogramms an die Steuerung 20 abgibt. Alternativ oder ergänzend zum Rundfunkempfänger 30 können auch weitere Audiosignalquellen, wie beispielsweise ein CC-(Compact Cassetten-), ein CD-(Compact Disc-) oder ein MD-(Mini Disc-) Abspielgerät an dies Steuerung 20 angeschlossen sein.

Zur Wiedergabe der Audiosignale des Rundfunkempfängers oder der alternativen oder ergänzenden Audiosignalquellen verfügt das Autoradio über eine mit der Steuerung 20 verbundene Wiedergabeeinheit 50, die in an sich bekannter Weise über die zur Wiedergabe von Audiosignalen erforderlichen Mittel, wie eine Lautstärke- und Klangbeeinflussung, einen Niederfrequenzverstärker, sowie an diesen angeschlossene Lautsprecher verfügt.

Zur Steuerung des Geräts durch den Benutzer ist an die Steuerung 20 eine Bedieneinheit 70 mit Bedienelementen 75, beispielsweise in Form von Drucktasten, angeschlossen. Die Bedieneinheit dient beim vorliegenden Ausführungsbeispiel
- der Wahl eines mittels des Rundfunkempfängers 30 zu empfangenden Rundfunksenders, beispielsweise durch Betätigung einer einem bestimmten Sender zugeordneten Stationstaste oder durch Einstellung einer bestimmten Rundfunksendefrequenz,
- der Einstellung einer Wiedergabelautstärke und gegebenenfalls eines bestimmten Klangbildes, beispielsweise durch frequenzselektive Einstellung einer Signalverstärkung,
- sofern eine alternative Audiosignalquelle an die Steuerung 20 angeschlossen ist, der Auswahl einer solchen Audiosignalquelle zur Wiedergabe eines auf einem zugehörigen Tonträger aufgezeichneten Audiosignals, beispielsweise eines bestimmten Musikstücks von einer CD,
- und gegebenenfalls weiterer Funktionen des Geräts 10.

Die mittels der Bedieneinheit 70 erzeugten Steuersignale werden mittels des in der Steuerung 20 gespeicherten Betriebsprogramms in Steuerungsabläufe zur Steuerung der betroffenen Komponenten, beispielsweise im Falle einer Sendereinstellung zur Steuerung der PLL des Rundfunkempfängers 30 zum Empfang der vorgegebenen Sendefrequenz umgesetzt.

Erfindungsgemäß verfügt das Autoradio, also die erfindungsgemäße Audioanlage, über einen Chipkartenleser 40 mit einem Kartenschacht, in den eine Chipkarte, beispielsweise nach dem ISO 7816-Standard, einsetzbar ist. Der Chipkartenleser 40 ist zur Auswertung von auf einer Chipkarte gespeicherten oder von der Chipkarte zur Verfügung gestellten Informationen, des weiteren aber auch zur Abgabe von Informationen an die Chipkarte ausgelegt. Dazu verfügt der Chipkartenleser über Gegenkontakte, die Kontaktflächen einer in den Kartenschacht eingeschobenen Chipkarte elektrisch kontaktieren. Die Gegenkontakte des Chipkartenlesers 40 sind mit dem Prozessor der Steuerung 20 verbunden.

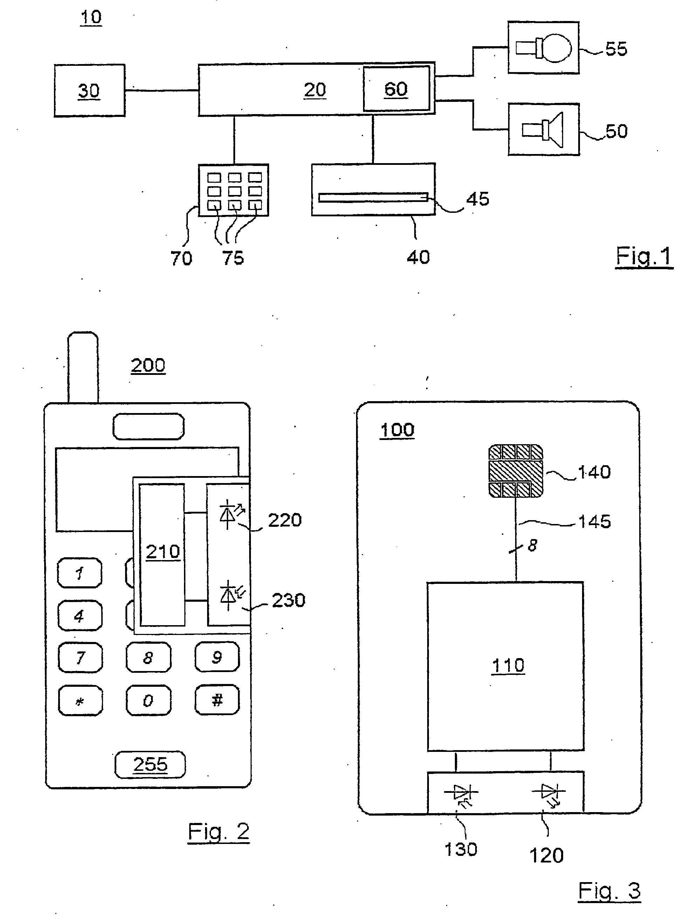

Bei der in Figur 1 dargestellten bevorzugten Ausführungsform des erfindungsgemäßen Autoradios ist an die Steuerung 20 ein Mikrofon 55 angeschlossen, das beispielsweise zur Steuerung des Autodradios mittels gesprochener Sprachbefehle vorgesehen ist. Alternativ oder ergänzend kann das Mikrofon beispielsweise auch zur Erfassung eines im Fahrzeuginnenraum herrschenden Störgeräuschpegels zum Zweck einer automatischen Lautstärkesteuerung in Abhängigkeit des Störgeräuschs vorgesehen sein.

Erfindungsgemäß verfügt die Steuerung 20 des Autoradios 10 über Weiterleitungsmittel, nämlich eine Weiterleitungsschaltung 60, über die wahlweise Audiosignale des Rundfunkempfängers 30 oder einer weiteren Audiosignalquelle, oder aber von einer in den Chipkartenleser 40 eingelegten Chipkarte an die Wiedergabevorrichtung weiterleitbar sind. Im einfachsten Fall ist die Weiterleitungsschaltung 60 als einfacher Umschalter ausgeführt, an dessen ersten Eingang der Rundfunkempänger 30 und an dessen zweiten Eingang das Datensignal des Chipkartenlesers angeschlossen ist. Im Falle weiterer Audiosignalquellen, wie CC-, CD-, MD-Spieler sind diese an weitere Eingänge des Umschalters angeschlossen. Der Ausgang des Umschalters ist an die Wiedergabeeinheit 50 angeschlossen, so daß jeweils genau ein Signal einer der an den Umschalter angeschlossenen Signalquellen an die Wiedergabeeinheit 50 weiterleitbar ist. Die Weiterleitungsschaltung wird im Hinblick auf die vorliegende Erfindung von der Steuerung 20 derart angesteuert, daß ein Sprechfunksignal vorrangig vor dem Signal eines empfangenen Rundfunksenders oder einer anderen Signalquelle ausgegeben wird.

Bei einer bevorzugten Ausführungsform ist die Weiterleitungsschaltung in Form einer Mischschaltung ausgeführt, wobei einem Mischer, in dem Audiosignale vorzugsweise additiv überlagert werden, die Sigale der verschiedenen angschlossenen Signalquellen, mit einem veränderbaren Faktor bewertet, zugeführt sind. Der jeweilige veränderbare Faktor einer jeden angeschlossenen Signalquelle ist dabei beispielsweise zwischen den Extremwerten 0 und 1 verstellbar, so daß bei Einstellung des Faktors auf den Wert 1 das entsprechende Signal voll zur Wiedergabeeinheit 50 durchgestellt, bei Einstellung des Faktors auf den Wert 0 das entsprechende Signal vollständig unterdrückt wird.

Bei dem in Figur 2 schematisch dargestellten erfindungsgemäßen Sprechfunkgerät handelt es sich beim vorliegenden Ausführungsbeispiel ohne Beschränkung der Allgemeinheit beispielsweise um ein Mobilfunktelefon.

Neben den bei solchen Geräten üblicherweise vorhandenen Komponenten beinhaltet dieses erfindungsgemäß eine zweite Sendeeinrichtung 220 zur Übertragung eines aus einem empfangenen Sprechfunksignals abgeleiteten Signals an eine externe Wiedergabevorrichtung 10 für akustische Signale.

Im vorliegenden Fall werden die empfangenen Sprechfunksignale einer zweiten Codierschaltung 210 zugeführt, die die akustischen Signale in ein Sendesignal, vorzugsweise in Form einer Puls Code Modulation (PCM), umsetzt. Das die Audiosignale des empfangenen Sprechfunksignals enthaltende PCM-Signal wird über die Sendeeinrichtung 220, beispielsweise eine optischen Sender, im vorliegenden Fall eine Infrarot-Sendediode, abgestrahlt.

Weiterhin weist das Sprechfunkgerät gemäß einer besonders vorteilhaften Ausführungsform der Erfindung eine zweite Empfangseinrichtung 230 auf, über die von einem externen Mikrofon 55 aufgenommene Sprachsignale an das Mobilfunktelefon 200 übertragbar sind. Vorzugsweise handelt es sich bei der zweiten Empfangseinrichtung 230 um ein, vorzugsweise im infraroten Bereich sensibilisiertes Element, beispielsweise um eine Infrarot-Fotodiode.

Die von der zweiten Empfangseinrichtung 230 aufgenommenen Signale werden zur Decodierung und Umsetzung in Sprachsignale oder in ein Sendesignal der zweiten Codierschaltung 210 zugeführt, die auch die Funktion einer Decodierschaltung umfaßt. Dort wird das über die zweite Empfangseinrichtung empfangene Infrarot-PCM-Signal decodiert und anstelle eines vom geräteeigenen Mikrofon 255 aufgenommenen Sprachsignals dem Sender des Mobilfunktelefons zugeführt.

Statt dessen kann es jedoch auch vorgesehen sein, daß das empfangene Infrarot-PCM-Signal durch die Codierschaltung 210 unbeeinflußt direkt dem Sender des Mobilfunktelefons zugeführt und dort in geeigneter Weise in ein Mobilfunk-Sendesignal umgesetzt wird.

Bei der in Figur 3 dargestellten Adapterkarte 100 handelt es sich gemäß vorliegendem Ausführungsbeispiel, ohne Beschränkung der Allgemeinheit, um eine Chipkarte nach dem Standard ISO 7816, die in jedem Fall mittels eines Chipkartenlesers auswertbar/beschreibbar ist.

Diese weist an ihrer Oberseite ein Kontaktfeld 140 mit elektrischen Kontakten auf, das über einen Datenbus 145 mit einem in den Kartenkörper eingebetteten Mikrochip 110 verbunden ist.

Bei einer alternativen Ausführungsform der Adapterkarte kann es demgegenüber vorgesehen sein, daß statt eines Kontaktfeldes der Datenaustausch zwischen Adapterkarte und Chipkartenleser berührungslos, also beispielsweise induktiv oder kapazitiv erfolgt, wozu sowohl Adapterkarte, als auch Chipkartenleser über die erforderlichen Mitte, wie induktive oder kapazitive Koppler verfügen.

Der Mikrochip 110 ist seinerseits wiederum mit einer ersten Sendeeinrichtung 120 und einer ersten Empfangseinrichtung 130 verbunden. Erste Sendeeinrichtung 120 und erste Empfangseinrichtung 130 bilden eine vorzugsweise optische Schnittstelle, beispielsweise für Infrarot-PCM-Signale.

Die beschriebene Adapterkarte 100 ist dazu ausgelegt, eine Verbindung zwischen einem beschriebenen Sprechfunkgerät 200 und einer ebenfalls beschriebenen Audioanlage 10 herzustellen, so daß mittels des Sprechfunkgeräts 200 empfangene Sprechfunksignale über die Wiedergabeeinheit 50, also die Lautsprecher der Audioanlage wiedergebbar sind. Weiter ist die Adapterkarte 100 vorzugsweise auch dazu ausgelegt, mittels eines Mikrofons 55 der Audioanlage aufgenommene Sprachsignale an das Sprechfunkgerät zum Umsetzen in Sprechfunksignale und zum Senden zu übermitteln.

Dazu sind die Umsetzungsmittel 110 der Chipkarte als erste Codierschaltung 110 in Form eines Codier-/Decodierchips ausgeführt, die ein mittels der ersten Empfangseinheit 130 empfangenes Infrarot-PCM-Signal in ein akustisch wiedergebbares Sprachsignal umsetzen, das über das Kontaktfeld 140 abnehmbar ist. Umgekehrt wird ein der ersten Codierschaltung 110 über die Kontakte 140 zugeführtes Sprachsignal in ein PCM-Signal umgestzt und über die erste Sendeeinrichtung 120 als Infrarot-PCM-Signal abgestrahlt.

Die Codierschaltung ist vorzugsweise in Form eines Mikroprozessors mit dazugehörigem Betriebsprogramm ausgeführt. Die Energieversorgung der Codierschaltung 110 wie auch der ersten Sende- und Empfangseinrichtung 120, 130 der Chipkarte 100 erfolgt vorzugsweise über den Datenbus 145 und die Kontakte 140 der Chipkarte vom Chipkartenleser 40 des Autoradios 10 aus.

Bei einer alternativen Ausführungsform sowohl des Sprechfunkgeräts 200, als auch der Adapterkarte 100 kann statt einer Infrarotschnittstelle zur Datenübertragung zwischen Sprechfunkgerät und Adapterkarte auch eine anderweitige drahtlose Schnittstelle, wie beispielsweise eine Funkschnittstelle eingesetzt werden. Prinzipiell ist jedoch auch eine Kabelverbindung zwischen Adapterkarte und Sprechfunkgerät denkbar.

Sprechfunkgerät 200 und Audioanlage 10 stellen im über die Adapterkarte 100 verbundenen Zustand eine Kommunikationsvorrichtung dar, die insbesondere eine Freisprecheinrichtung für ein Mobilfunktelefon darstellt.

Mittels des Mobilfunktelefons 200 empfangene Sprechfunksignale werden nach ihrer Demodulation in der zweiten Codierschaltung 210, also der Codierschaltung des Sprechfunkgeräts, in ein PCM-Signal umgesetzt und über die zweite Sendeeinheit 220, also die Sendeeinheit des Sprechfunkgeräts abgestrahlt. Bei geeigneter Ausrichtung des Sprechfunkgeräts 200 bzw. der zweiten Sendeeinheit 220 relativ zu der in den Chipkartenleser 40 des Autoradios 10 eingeschobenen Chipkarte 100 bzw. deren erster Empfangseinheit 130 werden die vom Sprechfunkgerät abgestrahlten Infrarot-PCM-Signale, die den Inhalt des empfangenen Sprechfunksignals enthalten, durch die erste Empfangseinheit 130 der Adapterkarte empfangen und an die erste Codierschaltung 110 der Adapterkarte 110 weitergeleitet. Dort werden die PCM-Signale in ein Audiosignal umgesetzt und über den Datenbus 145 und die Kontakte 140 der Adapterkarte dem Chipkartenleser zugeführt, von wo das Sprachsignal über die Weiterleitungsschaltung 60 zur Ausgabeeinheit 50 gelangt und wiedergegeben wird.

Umgekehrt werden über das Mikrofon 55 der Audioanlage aufgenommene Sprachsignale über die Weiterleitungsschaltung 60 an den Chipkartenleser 40 und von dort über die Kontakte 140 der in den Chipkartenleser 40 eingelegten Adapterkarte 100 und deren Datenbus 145 der Codierschaltung 110 der Adapterkarte 100 zugeführt. In der Codierschaltung werden die vom Mikrofon aufgenommenen Sprachsignale in ein PCM-Signal umgesetzt und über die ersten Sendeeinrichtung 120 der Adapterkarte 120 in Form eines Infrarot-PCM-Signal abgestrahlt. Bei geeigneter Ausrichtung des Mobilfunktelefons 200 bzw. dessen zweiter Empfangseinrichtung 230 relativ zur ersten Sendeeinrichtung 120 der Adapterkarte 100 werden die Infrarot-PCM-Signale von der zweiten Empfangseinheit 230 des Sprechfunkgeräts aufgenommen und der zweiten Codierschaltung 210 des Sprechfunkgeräts 200 zugeführt. Dort werden sie in Sprachsignale umgesetzt und schließlich dem Funksender des Sprechfunkgeräts zum Senden zugeführt.

Die beschriebene Kommunikationsvorrichtung bestehend aus über die beschriebene Adapterkarte verbundenem Autoradio und Mobilfunktelefon stellt somit ein Mobilfunktelefon mit Freisprecheinrichtung dar, wobei für Wiedergabe und Aufnahme von Sprachsignalen das Autoradio verwendet wird.

Verfügt das Autoradio über kein eigenes Mikrofon, kann es erfindungsgemäß vorgesehen sein, daß statt dessen das Mikrofon 255 des Sprechfunkgeräts 200 zur Aufnahme von Sprachsignalen verwendet wird. Dieses ist dazu so ausgelegt, daß es auch zur Aufnahme von Sprachsignalen aus für Mobilfunktelefone unüblichen Entfernungen in der Größenordnung von ungefähr einem Meter geeignet ist.

Weiterhin ist es vorgesehen, daß bei Eingang eines Sprechfunksignals oder bei Aufbau einer Sprechfunkverbindung zwischen einem Sprechfunkteilnehmer und dem erfindungsgemäßen Sprechfunkgerät 200 dieses ein entsprechendes, ein solches Ereignis anzeigendes Signal erzeugt und über die Adapterkarte an das Autoradio sendet. Die Steuerung 20 des Autoradios ist für einen solchen Fall derart ausgeführt, daß bei Eingang eines solchen Signals die Wiedergabe eines aktuell wiedergegebenen Rundfunkprogramms oder beispielsweise einer Compact-Cassette durch die Weiterleitungsschaltung 60 unterbrochen, und statt dessen das eingegangene Sprechfunksignal wiedergegeben wird. Ebenso wird die Audiosignalwiedergabe auch dann unterbrochen, wenn durch den Benutzer eine Sprechfunkverbindung initiiert wird. Die Wiedergabe der zuvor wiedergegebenen Audiosignalquelle wird über die Weiterleitungsschaltung 60 erst dann fortgesetzt, wenn die Sprechfunkverbindung unterbrochen ist.

Gemäß einer Weiterbildung der Erfindung kann es weiterhin vorgesehen sein, daß statt der Bedienelemente des Sprechfunkgeräts zu dessen Bedienung die Bedienelemente 75 des Autoradios verwendet werden können, wobei die mittels der Bedieneinheit 70 durch den Benutzer erzeugten Steuerbefehle über die Adapterkarte an das Sprechfunkgerät übermittelt werden. Insbesondere kann beispielsweise die Rufnummer eines anzuwählenden Gesprächsteilnehmers über die Bedieneinheit 70 des Autoradios eingegeben und an das Sprechfunkgerät übertragen werden.

## Patentansprüche

1. Kommunikationsvorrichtung mit einer Audioanlage (10), die eine Wiedergabeeinheit (50) zur Wiedergabe eines Audiosignals umfasst, und mit einem Sprechfunkgerät (200), das mit der Audioanlage (10) derart verbindbar ist, dass mittels des Sprechfunkgeräts (200) empfangene Signale über die Wiedergabeeinheit (50) der Audioanlage (10) wiedergebbar sind, wobei die Audioanlage (10) einen Chipkartenleser (40) zum Auslesen und/oder Einspeisen von Signalen aus/auf eine/r eingelegte/n Chipkarte umfasst,
wobei das Sprechfunkgerät und die Audioanlage (10) über eine in den Chipkartenleser (40) der Audioanlage (10) einsetzbare, vom Sprechfunkgerät baulich getrennte Adapterkarte (100) miteinander verbindbar sind,
wobei die Adapterkarte (100) Verbindungsmittel (120, 130) zur Herstellung einer unmittelbaren Kommunikationsverbindung und zum Austausch von Signalen mit dem Sprechfunkgerät (200) aufweist und
wobei die Verbindungsmittel (120, 130) in Form einer drahtgebundenen oder drahtlosen Schnittstelle, insbesondere einer elektrooptischenoder FunkSchnittstelle in Form einer Empfangs- und/oder Sendeeinrichtung für optische oder Funk-Signale, ausgeführt sind.

2. Kommunikationsvorrichtung nach Anspruch 1, **gekennzeichnet durch** ein mit der Audioanlage (10) verbundenes Mikrofon (55) zur Aufnahme von Sprachsignalen, und **durch** eine Ausbildung des Chipkartenlesers (40) und der Adapterkarte (100) derart, dass die Mikrofonsignale an das Sprechfunkgerät weiterleitbar sind.

3. Kommunikationsvorrichtungnach einem der vorhergehenden Ansprüche, **dadurch gekennzeichnet, dass** die Audioanlage (10) Weiterleitungsmittel (60) zur Weiterleitung von aus einer eingelegten Adapterkarte (100) ausgelesenen akustischen Signalen an die Wiedergabevorrichtung aufweist.

4. Kommunikationsvorrichtung nach Anspruch 3, **gekennzeichnet durch** ein Mikrofon zur Aufnahme akustischer Sprachsignale und **durch** Weiterleitungsmittel (60) zur Weiterleitung der Mikrofonsignale an die in den Chipkartenleser eingelegte Adapterkarte (100).

5. Kommunikationsvorrichtung nach einem der vorhergehenden Ansprüche, **dadurch gekennzeichnet, dass** die Adapterkarte (100) Kontaktierungsmittel (140) zum Auslesen und/oder Einspeisen von Signalen auf die Adapterkarte (100) mittels des Chipkartenlesers (40) aufweist und dass die Kontaktierungsmittel (140) in Form von an einer Kartenoberfläche angeordneten elektrischen Kontakten ausgeführt sind.

6. Kommunikationsvorrichtung nach einem der vorhergehenden Ansprüche, **dadurch gekennzeichnet, dass** die Adapterkarte Umsetzungsmittel (110) zur Umsetzung der vom Sprechfunkgerät (200) empfangenen codierten Signale in akustisch wiedergebbare Sprachsignale und/oder zur Umsetzung von über Kontaktierungsmittel (140) eingespeiste Signale in codierte Signale aufweist.

## Claims

1. Communication apparatus having an audio installation (10), which comprises a reproduction unit (50) for reproducing an audio signal, and having a radiotelephone (200) which can be connected to the audio installation (10) such that signals received by means of the radiotelephone (200) can be reproduced via the reproduction unit (50) of the audio installation (10), wherein the audio installation (10) comprises a chip card reader (40) for reading and/or supplying signals from/to an inserted chip card,
wherein the radiotelephone and the audio installation (10) can be connected to one another using an adaptor card (100), which is physically separate from the radiotelephone and can be inserted into the chip card reader (40) of the audio installation (10),
wherein the adaptor card (100) has connecting means (120, 130) for setting up a direct communication link and for interchanging signals with the radiotelephone (200), and
wherein the connecting means (120, 130) are in the form of a wired or wireless interface, particularly an electro-optical or radio interface in the form of a reception and/or transmission device for optical or radio signals.

2. Communication apparatus according to Claim 1,
**characterized by** a microphone (55), connected to the audio installation (10), for picking up voice signals and by the chip card reader (40) and the adaptor card (100) being in a form such that the microphone signals can be forwarded to the radiotelephone.

3. Communication apparatus according to one of the preceding claims, **characterized in that** the audio installation (10) has forwarding means (60) for forwarding audible signals read from an inserted adaptor card (100) to the reproduction apparatus.

4. Communication apparatus according to Claim 3, **characterized by** a microphone for picking up audible voice signals and by forwarding means (60) for forwarding the microphone signals to the adaptor card (100) inserted in the chip card reader.

5. Communication apparatus according to one of the preceding claims, **characterized in that** the adaptor card (100) has contact-making means (140) for reading and/or supplying signals from/to the adaptor card (100) using the chip card reader (40) and **in that** the contact-making means (140) are in the form of electrical contacts arranged on a card surface.

6. Communication apparatus according to one of the preceding claims, **characterized in that** the adaptor card has conversion means (110) for converting the encoded signals received from the radiotelephone (200) into audibly reproducible voice signals and/or for converting signals supplied via contact-making means (140) into encoded signals.

## Revendications

1. Dispositif de communication qui présente une installation audio (10) qui comporte une unité de reproduction (50) qui reproduit un signal audio et un appareil de radiotéléphonie (200) qui est relié à l'installation audio (10) de telle sorte que les signaux reçus au moyen de l'appareil de radiotéléphonie (200) puissent être reproduits par l'unité de reproduction (50) de l'installation audio (10),
l'installation audio (10) comprenant un lecteur (40) de carte à puce qui permet de lire et/ou d'injecter des signaux sur une carte à puce qui y a été insérée,
l'appareil de radiotéléphonie et l'installation audio (10) pouvant être reliés l'un à l'autre par une carte d'adaptation (100) séparée structurellement de l'appareil de radiotéléphonie et utilisable dans le lecteur (40) de carte à puce de l'installation audio (10),
la carte d'adaptation (100) présentant des moyens de liaison (120, 130) qui permettent d'établir une liaison de communication directe et d'échanger des signaux avec l'appareil de radiotéléphonie (200),
les moyens de liaison (120, 130) étant réalisés sous la forme d'une interface filaire ou sans fil, en particulier une interface électro-optique ou une interface radio, qui présente la forme d'un ensemble de réception et/ou d'émission de signaux optiques ou de signaux radio.

2. Dispositif de communication selon la revendication 1, **caractérisé par** un microphone (55) relié à l'installation audio (10) et qui enregistre des signaux vocaux, et par un mode de réalisation du lecteur (40) de carte à puce et de la carte d'adaptation (100) qui permet de transmettre les signaux du microphone à l'appareil de radiotéléphonie.

3. Dispositif de communication selon l'une des revendications précédentes, **caractérisé en ce que** l'installation audio (10) présente des moyens de transmission (60) qui transmettent au dispositif de reproduction des signaux acoustiques lus sur une carte d'adaptation (100) qui y a été insérée.

4. Dispositif de communication selon la revendication 3, **caractérisé par** un microphone qui enregistre des signaux vocaux acoustiques et par des moyens de transmission (60) qui transmettent les signaux du microphone à la carte d'adaptation (100) insérée dans le lecteur de carte à puce.

5. Dispositif de communication selon l'une des revendications précédentes, **caractérisé en ce que** la carte d'adaptation (100) présente des moyens (140) de mise en contact qui servent à lire et/ou injecter des signaux sur la carte d'adaptation (100) au moyen du lecteur (40) de carte à puce et **en ce que** les moyens de mise en contact (140) sont réalisés sous la forme de contacts électriques disposés sur une surface de la carte.

6. Dispositif de communication selon l'une des revendications précédentes, **caractérisé en ce que** la carte d'adaptation présente des moyens de conversion (110) qui convertissent les signaux codés reçus de l'appareil de radiotéléphonie (200) en signaux vocaux reproductibles acoustiquement et/ou qui convertissent en signaux codés les signaux injectés par l'intermédiaire des moyens de mise en contact (140).
